# EUROPEAN PATENT SPECIFICATION

(11) **EP 0 997 271 B1**
(45) Date of publication and mention of the grant of the patent: **25.02.2004**
(21) Application number: 99308484.7
(22) Date of filing: 27.10.1999
(51) Int. Cl.: B32B 31/18, B42D 15/00, B42D 5/02

(54) **Method of laminating a foldable strip of spaced opaque panels**
Verfahren zum Laminieren einer faltbaren Bahn von undurchsichtigen Platten mit Zwischenraum
Procédé pour laminer une bande pliable comportant des plaques opaques espacées

(30) Priority: 28.10.1998 GB 9823637
(43) Date of publication of application: 03.05.2000
(73) Proprietor: Gardiner, Pamela J., Oakwood, Chichester P018 8AA (GB)
(72) Inventor: Gardiner, Charles, Slindon, Nr Arundel BN18 0LY (GB)
(74) Representative: Goddard, Frances Anna

(56) References cited:
- EP-A- 0 359 057
- US-A- 3 514 355
- US-A- 4 850 611
- US-A- 5 453 142

## Description

The invention relates to a method of producing a laminated foldable strip of spaced opaque panels.

According to the invention there is provided a method of producing a laminated foldable strip of spaced opaque panels comprising die cutting a strip of opaque material to form spaced apart parallel slots each having a width measured in a direction longitudinally of the strip and a length greater than the desired width of the foldable strip measured transversely of the length of the strip, laminating the opaque diecut strip between sheets of transparent plastics and guillotining the laminated materials to remove side portions thereof including end portions of the diecut slots thereby to form a foldable strip of the desired width comprising a succession of the spaced opaque panels and being foldable portions of the foldable strip provided between the panels and corresponding to the width of the respective diecut slot.

Preferably the length of the panels, measured in a direction longitudinally of the foldable strip decreases from one end to the other end of the strip so that the strip can be folded by folding over the panels from one end to the other in the same direction rather than having to have alternate bends in opposite directions to form a concertina strip.

Advantageously the width of the portions of the foldable strip devoid of opaque panels increases from one end of the strip to the other end of the strip to produce a folded strip which lies flat and does not have undue thickness.

Foldable strips of spaced opaque panels can be used to display information such as train or aircraft schedules and preferably comprise a plurality of approximately credit card sized paper panels with printing thereon sandwiched between a pair of transparent plastic sheets. The strip is preferably foldable so that all the panels are superposed into a pile having an overall size approximately equal to one of the panels for convenient storage in a wallet, purse or pocket of a user. It is desirable that the paper panels do not extend through the folds in the strip since if the paper layer does not have to be folded then the fold can be more easily effected.

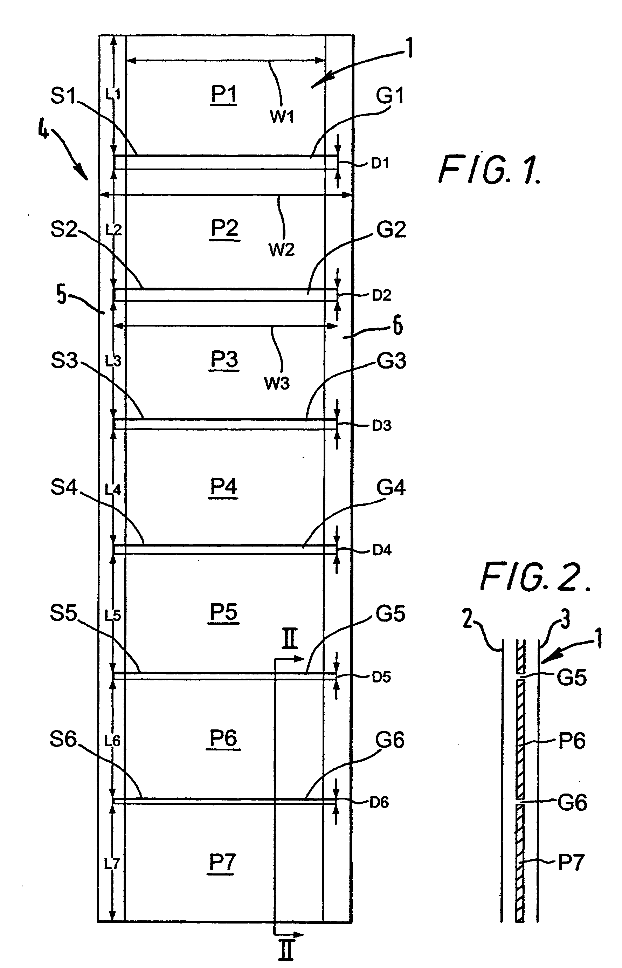

The invention is diagrammatically illustrated by way of example in the accompanying drawing, in which:-
Figure 1 shows a plan view of an unfolded laminated foldable strip of spaced opaque panels formed by the method according to the invention; and
Figure 2 is a sectional view taken on line II-II of Figure 1 with the components of the laminated foldable strip separated to show their arrangement.

Referring to the drawing a laminated foldable strip 1 is formed by a plurality of panels P1 to P7 (the number is chosen arbitrarily and could be more or less but is preferably between 3 and 20) of paper sandwiched between a pair of sheets 2,3 of transparent plastics preferably polypropylene or polyester, the panels P1 and P2 being separated by a gap G1, the panels P2 and P3 by a gap G2, the panels P3 and P4 by a gap G3, the panels P4 and P5 by a gap G4, the panels P5 and P6 by a gap G5 and the panels P6 and P7 by a gap G6. As shown the gaps G1 to G6 have respective widths D1 to D6 and the gap width reduces from one end of the strip to the other so that the gap D1 is wide and the gap D6 is narrow. The panels P1 to P7 all have the same width W measured transversely of the longitudinal direction of the strip which is preferably in the region of 85mm. The depth L1 to L7 of the panels P1 to P7 varies from one end of the strip to the other with the depth L1 of the panel P1 being approximately 50mm and the depth L7 of the panel P7 being approximately 46mm.

To obtain the spacings shown of the panels P1 to P7 at the reducing distances apart D1 to D6, a strip of paper 4 having a width W2 greater than the width W1 is diecut with slots S1 to S6 each having a length W3, measured transversely of the longitudinal extent of the strip 4, greater than W1 but less than W2 and a respective width equal to the width D1 to D6 of the required gap G1 to G6. Subsequent to the diecutting operation the strip 4 is laminated between the transparent panels 2 and 3 and sealed thereto by heat and subsequently side portions 5 and 6 of the laminated strip are guillotined off to leave the panels P1 to P7 accurately spaced apart by the gaps G1 to G6 so that the panel can be folded by folding the panel P7 onto the panel P6, the panels P6 and P7 onto the panel P5, the panels P5, P6 and P7 onto the panel P4, the panels P4, P5, P6 and P7 onto the panel P3, the panels P3, P4, P5, P6 and P7 onto the panel P2 and the panels P2, P3, P4, P5, P6 and P7 onto the panel P1, folding being continued in the same direction in a continuous rolling movement. The variations D1 to D6 in the widths of the gaps G1 to G6 respectively allow for the fact that the panels P3 to P7 must all be received between the panels P1 and P2 when the strip is folded and thus the width D1 needs to be approximately equal to five times the thickness of the laminated strip but no panel thicknesses need to be received between the panels P6 and P7 and thus the gap G6 can be of minimal width D6.

## Claims

1. A method of producing a laminated foldable strip (1) of spaced opaque panels (P1 to P7) comprising die cutting a strip of opaque material (4) to provide spaced apart parallel slots (S1 to S6) each having a width (D1to D6) measured in a direction longitudinally of the strip (1), having a length (W3) greater than the desired width (W1) of the foldable strip (1) measured transversely of the length of the strip (1), laminating the opaque diecut strip between sheets (2,3) of transparent plastics and guillotining the laminated materials to remove side portions (5,6) thereof including end portions of the diecut slots (S1 to S6) thereby to form a foldable strip (I) of the desired width (W1) comprising a succession of the spaced opaque panels (P1 to P7) and being foldable at portions (G1 to G6) of the foldable strip (1) provided between the panels (P1 to P7) and corresponding to the width (D1 to D6) of the respective diecut slots (S1 to S6).

2. A method according to claim 1, including so disposing the slots (S1 to S6) that the length of the panels measured in a direction longitudinally of the foldable strip (1) decreases from one end to the other end of the strip (1) whereby the strip (1) can be folded by folding over the panels (P1 to P7) from one end to the other in the same direction in a continuous rolling movement.

3. A method according to claim 1 or claim 2, including so forming the slots (S1 to S6) that the width portions (G1 to G6) of the foldable step (1) devoid of opaque panels (P1 to P7) increases from one end of the strip (1) to the other end of the strip (1) to provide a folded strip which can lie flat and does not have undue thickness.

## Patentansprüche

1. Verfahren zum Erzeugen einer laminierten, faltbaren Bahn (1) im Abstand angeordneter, undurchsichtiger Felder (P1 bis P7) unter Abstanzen einer Bahn aus undurchsichtigem Material (4) zum Schaffen im Abstand angeordneter, paralleler Schlitze (S1 bis S6), deren jeder eine Breite (D1 bis D6) hat, die in einer Richtung längs zu der Bahn (1) gemessen wird, mit einer Länge (W3), die größer ist als die gewünschte Breite (W1) der faltbaren Bahn (1), quer zur Länge der Bahn (1) gemessen, Laminieren der undurchsichtigen, abgestanzten Bahn zwischen Folien (2, 3) aus transparenten Kunststoffen und Schneiden der laminierten Materialien, um Seitenabschnitte (5, 6) derselben, einschließlich Endabschnitten der abgestanzten Schlitze (S1 bis S6) zu entfernen, um dadurch eine faltbare Bahn (1) der gewünschten Breite (W1) mit einer Folge von im Abstand angeordneten, undurchsichtigen Feldern (P1 bis P7) zu bilden, wobei die Bahn an Abschnitten (G1 bis G6) der faltbaren Bahn (1), die zwischen den Feldern (P1 bis P7) vorgesehen sind, und entsprechend der Breite (D1 bis D6) der entsprechenden, abgestanzten Schlitze (S1 bis S6) faltbar ist.

2. Verfahren nach Anspruch 1, wobei die Schlitze (S1 bis S6) derart angeordnet werden, daß die Länge der Felder, die in einer Richtung längs der faltbaren Bahn (1) gemessen ist, von einem Ende der Bahn (1) zu dem anderen Ende abnimmt, wodurch die Bahn (1) durch Überfalten der Felder (P1 bis P7) von einem Ende zu dem anderen in derselben Richtung in einer kontinuierlichen Rollbewegung gefaltet werden kann.

3. Verfahren nach Anspruch 1 oder Anspruch 2, wobei die Schlitze (S1 bis S6) so geformt werden, daß die Breitenabschnitte (G1 bis G6) der faltbaren Bahn (1) ohne undurchsichtige Felder (P1 bis P7) von einem Ende der Bahn (1) zu dem anderen Ende der Bahn (1) zunimmt, um eine gefaltete Bahn vorzusehen, die flach liegen kann und nicht unangemessene Dicke hat.

## Revendications

1. Procédé de fabrication d'une bande pliable stratifiée (1) constituée de panneaux opaques espacés (P1 à P7) comprenant la découpe à l'emporte pièce d'une bande de matériau opaque (4) pour réaliser des fentes parallèles espacées (S1 à S6) présentant chacune une largeur (D1 à D6) mesurée dans une direction longitudinale de la bande (1), présentant une longueur (W3) supérieure à la largeur désirée (W1) de la bande pliable (1) mesurée de façon transversale par rapport à la longueur de la bande (1), la stratification de la bande découpée à l'emporte pièce opaque entre les feuilles (2, 3) de matières plastiques transparentes et le massicotage des matériaux stratifiés pour enlever leurs parties latérales (5, 6) y compris les parties d'extrémité des fentes découpées à l'emporte pièce (S1 à S6) pour former ainsi une bande pliable (1) de la largeur désirée (W1) comprenant une succession de panneaux opaques espacés (P1 à P7) et qui est pliable au niveau des parties (G1 à G6) de la bande pliable (1) prévues entre les panneaux (P1 à P7) et correspondant à la largeur (D1 à D6) des fentes découpées à l'emporte pièce respectives (S1 à S6).

2. Procédé selon la revendication 1, comprenant la disposition des fentes (S1 à S6) de sorte que la longueur des panneaux mesurée dans une direction longitudinale de la bande pliable (1) diminue d'une extrémité à l'autre extrémité de la bande (1) d'où il résulte que la bande (1) peut être pliée en repliant les panneaux (P1 à P7) d'une extrémité à l'autre dans la même direction suivant un mouvement de roulement continu.

3. Procédé selon la revendication 1 ou la revendication 2, comprenant la formation de fentes (S1 à S6) de sorte que les parties en largeur (G1 à G6) de la bande pliable (1) dénuée de panneaux opaques (P1 à P7) augmentent d'une première extrémité de la bande (1) à l'autre extrémité de la bande (1) pour réaliser une bande pliée qui peut être plate et qui ne présente pas d'épaisseur indue.
